# EUROPEAN PATENT SPECIFICATION

(11) **EP 4 260 765 B1**
(45) Date of publication and mention of the grant of the patent: **23.09.2026**
(21) Application number: 23166513.4
(22) Date of filing: 04.04.2023
(51) Int. Cl.: A47F 3/04, A47F 3/02, A23G 3/34, G03H 1/00

(54) **LID STRUCTURE FOR CONTAINERS OF REFRIGERATED DISPLAY COUNTERS FOR SELLING ICE-CREAM**
DECKELSTRUKTUR FÜR BEHÄLTER VON GEKÜHLTEN VERKAUFSTHEKEN FÜR SPEISEEIS
STRUCTURE DE COUVERCLE POUR RÉCIPIENTS DE COMPTOIRS RÉFRIGÉRÉS POUR LA VENTE DE GLACES

(30) Priority: 12.04.2022 IT 202200007193
(43) Date of publication of application: 18.10.2023
(73) Proprietor: Glass Company S.r.l., 61122 Pesaro (PU) (IT)
(72) Inventor: Bernabucci, Claudio, 61121 Pesaro (IT)
(74) Representative: Benedetti, Gianluca

(56) References cited:
- CN-A- 113 384 108
- JP-A- S63 241 588
- KR-B1- 101 081 617
- US-A1- 2004 047 013

## Description

### Field of the art

Refrigerated display counters for selling ice-cream, structures for the separate containment of the assortment of flavours offered for sale duly refrigerated based on the characteristics of the product are known.

In terms of display and drawing the attention of the customers, as well as in terms of speed in packaging cones and cups by the operator, the best structures are open vats, where patrons may see the content and the operators have easy access thereto.

Furthermore, in terms of optimisation of storage of foodstuff, maintaining the organoleptic properties and hygienic conditions in general, the ice-cream is best stored in steel containers hermetically sealed by lids - also made of steel - where the product is protected from light and temperature change, instead of vats. However, the steel containers have the drawback lying in not displaying the product, therefore not drawing the attention of the customer.

An example of the technical field relating to displaying the products contained in a refrigerator for displaying to the public is disclosed by the Korean patent KR101081617B1 dated 9 November 2011 on behalf of T1 Systems Co Ltd., but such a solution does not apply to (is not fitted for) a plurality of single containers each of which of single ice cream flavours.

### Objects of the invention

In this context, the main object of the present invention is to provide a lid structure for steel containers capable of allowing the patron to immediately view and uniquely see the contents of the container enclosed in the refrigerated display counters for selling assortments of ice-cream to the public.

Another object of the present invention is to achieve the preceding object through an innovation concept applicable to existing refrigerated display counters and not expressly designed to house it without requiring any adaptation whatsoever.

Another object of the present invention is to attain the previous objects through an innovation concept without any contraindications whatsoever with regard to appropriateness and hygiene conditions for the storage of the product as well as without impeding the distribution work of the designated operator.

A further object of the present invention is to attain any one of the aforementioned objects through a method and a device for relative implementation that are simple and efficient, safe to use and relatively inexpensive considering the actual results attained therewith.

### Summary of the solution concept

These and other objects are all attained by means of the lid structure for steel containers of refrigerated display counters for selling ice-cream according to the present invention as defined by the claims, of the type consisting of a plurality of steel containers for the separate containment of the assortment of ice cream flavours offered for sale, assembled in a refrigerated display counter on view of the consumer and in each of which the seller can draw ice cream after removing the lid of the specific container or refrigerated vat to make the assortment requested by the customer comprising a removable lid (6) covering each container (2) wherein each removable lid is externally associated on top with a respective holographic projector (8) or with a respective electronic image generator for generating - in use - a holographic image (11) or a digital image visible to the consumer and in particular holographic image (11) or digital image of the ice-cream of the type and flavour contained in the container (2) with which the specific lid is associated.

### Description of the attached drawings

Further characteristics and advantages of the lid for steel structures for refrigerated display counters for selling ice-cream according to the present invention shall be more apparent from the following detailed description of a preferred but non-exclusive embodiment thereof, represented solely by way of non-limiting example with reference to the two attached drawings, wherein:

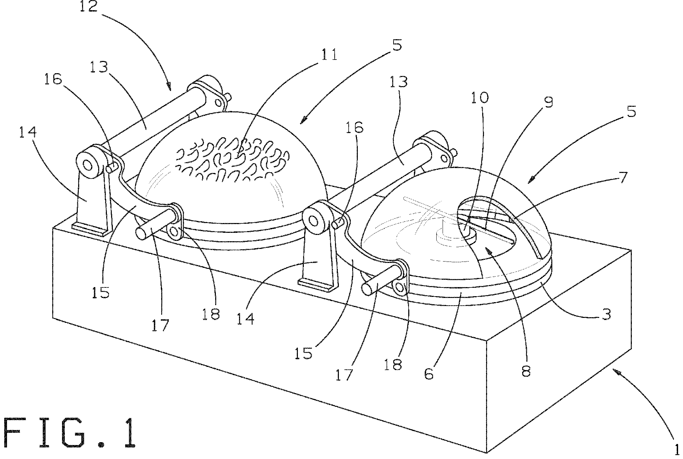

Figure 1 shows a purely exemplifying and decontextualised schematic view of a portion of the service surface extrapolated from a refrigerated display counter for the retail sale of ice-cream comprising two examples of lids for steel containers according to the present invention, one of which is a cross-sectional view, in a first operative position thereof;

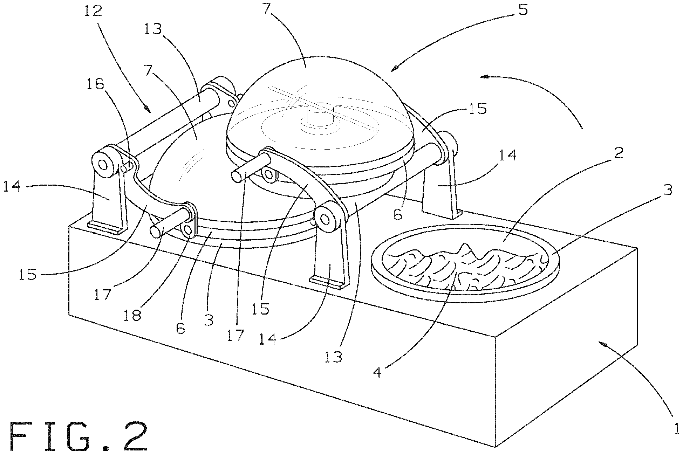

Figure 2 shows a purely exemplifying and decontextualised schematic view of a portion of the service surface extrapolated from a refrigerated display counter for the retail sale of ice-cream comprising two examples of lids for steel containers according to the present invention, in a second operative position thereof.

### Static description of the embodiment

With reference to the figures and in particular to figure 1, a portion of a refrigerated display counter for the retail sale of ice-cream, extrapolated and decontextualised therefrom, but to be imagined as a component of one or more rows displayed to the public, as usual protected by a transparent screen on the display side and adapted to allow packaging and distribution by at least one operator on the other side, so as to be interposed at an operating and visual height between the operator and the customers, is schematically shown in its entirety with 1.

Cylindrical steel containers in a well, with an introduction rim 3 abutting against the surface of the counter 1, embedded in the counter 1 and cooled by the latter, and made - as usual - of stainless steel, are indicated with 2;
shown with 4 in the steel containers 2 is the ice-cream, to be intended as with different flavours in the respective steel containers comprised in the counter 1.

Each steel container 2 is closed by a lid indicated in its respective entirety with 5.

Each lid 5 comprises a circular steel shutter 6 for introduction 3 into the respective steel container 2 and a transparent cover 7, surmounting the shutter 6, dome-shaped according to the invention.

Under the dome 7 and above the shutter 6 there is provided for a holographic projector 8, for example of the type consisting of a rotary led bar 9 with axis 10 centrally fixed to the shutter 6, for example power-supplied by a respective battery associated thereto and not shown, adapted to generate a two-dimensional or three-dimensional holographic image 11 in the transparent cover 7.

In the illustrated embodiment, each lid 7 is provided with a respective tilting opening system 12, with functional maintenance of horizontal orientation by gravity, consisting of a hinge pin 13 tangent to the lid 5 raised on a pair of apical supports 14 protruding above the surface of the counter, on which there are laterally pivoted two parallel levers 15 with an end-stroke protrusion 16 and opening grasping element 17, at whose ends there are pivoted links 18 to which the shutter 6 of the lid 5 is hanged in a tilting fashion.

In conformations thus made of the tilting lid, in the elements forming the hinging system there may be passed through appropriately concealed and protected power cables for power-supplying the image generation electronic device 8 associated therein, instead of providing it with an independent power supply battery; the latter solution is instead compulsory when the lids are loose and removable.

As a matter of fact, the conformation and opening system of the lids 5 shown in the drawings are provided purely by way of example:
in particular, the lids, without prejudice to structuring with a steel shutter supporting any hologram generator or electronic image generator, enclosed in a transparent structure even without further transparent cover with respect to its own screen or its own structuring and conformation, may be designed in any manner and particularly conical or truncated-pyramid like in the more usual aesthetic solutions, with apical grasp element; or transparent portions enclosing the hologram generator or electronic image generator with any conformation and manual grasping system, handle or knob; or any kind or type of opening device, constrained to the surface such as hinges, linkages and the like, or - on the contrary - unconstrained from the surface and removable using apical and/or lateral grasping elements and/or handles.

The images to be generated may be provided to any hologram generator or electronic image generator both through a circuit board designed for the specific electronic device, obviously contingently provided with an appropriate reader;
alternatively, but also supplementarily any hologram generator or electronic image generator, they may be provided with wired or wireless connections such as Bluetooth and the like, for connection to personal computers and/or portable electronic devices (smartphones, tablets and the like) with any applications designed for the remote management, setting and definition of images; for the purposes outlined hereinafter.

### Dynamic description of the embodiment

Thus, having completed the static description of an embodiment of the refrigerated display counters lid for steel containers for retail sale according to the present invention, following is the dynamic description of the same, i.e., the relative operation:
the refrigerated display counter 1 is displayed to the public like it happens in the prior art and the relative steel containers 2 are filled with ice-cream for distribution.

Each duly programmed holographic projector 8 or electronic image generator generates - inside the transparent cover 7 of the lid 5 - the holographic image or electronic image generator of the ice-cream contained in the reference steel container 2, or of the flavour contained therein;
obviously, the image may alternatively or supplementarily relate to any other different object, communication or commercial message.
so that the customer can select and instruct the operator for the scooping and assortment viewing the product without the need for openings, which are not strictly related to scooping the portion of the contents, which can negatively impact the organoleptic properties and quality of the product.

### Alternative embodiments

It is obvious that in further alternative embodiments still falling within the solution concept subject of the embodiment illustrated above and claimed below, the lid structure for steel containers of refrigerated display counters for selling ice-cream according to the present invention may be implemented through equivalent technical and mechanical means, i.e. with further supplementary solutions, same case applying to all shapes of the relative components that can be varied to suit the purpose.

Particularly, like observable from the meaning, the lids may be however be structured and shaped in any alternative manner with respect to the one shown by way of example.

### Advantages of the invention

As observable from the preceding detailed description of a preferred embodiment and as mentioned above regarding some variant embodiments, the lid structure for steel containers of refrigerated display counters for selling ice-cream according to the present invention offers the advantages corresponding to the attainment of these and other pre-set objects: as a matter of fact, it integrates a functional, modular and cost-effective concept solution suitable to promote appeal of the goods displayed for sale in the field of retail distribution of ice-cream without negative impact on the quality of the product offered for sale.

### KEY TO REFERENCE NUMBERS

- 1 ): portion of the refrigerated display counter
- 2 ): steel containers
- 3 ): introduction rim abutting against the steel containers
- 4 ): ice-cream
- 5 ): lid of the steel containers as a whole
- 6 ): shutter that is the lower part of the steel lid
- 7 ): dome that is the upper part of the lid made of transparent material
- 8 ): holographic projector as a whole
- 9 ): rotary led bar
- 10): axis of the rotary led bar
- 11): holographic image
- 12): tilting opening as a whole
- 13): hinge pin
- 14): apical supports of the hinge pin
- 15): pair of pivoted levers on the hinge pin
- 16): end-of-stroke protrusion
- 17): opening and closing grasping element
- 18): links at the ends of the levers for the tilting grasping of the lid

## Claims

1. Lid structure for steel containers of refrigerated display counters for selling ice-cream, wherein the ice-cream is stored in a plurality of steel containers filled with ice-cream for distribution hermetically sealed by said lids made of steel, where the ice-cream is protected from light and temperature change thus maintaining the organoleptic properties and hygienic conditions, the steel containers being embedded in respective wells in the counter and cooled by the latter for the separate containment of the assortment of ice cream flavours offered for sale, the refrigerated display counter being interposed at an operating and visual height between the operator and the customers on view of the consumer and in each of which the operator can draw ice cream after removing the lid of the specific steel container to make the assortment requested by the customer **characterised in that** the lid structure comprises a removable lid configured to cover a respective steel container (2) where:
- each lid (5) comprises in the lower part a circular steel shutter (6) for introduction (3) into the respective steel container (2) and a transparent dome-shaped cover (7) surmounting the shutter (6)
- wherein each removable lid (5) has on top a respective electronic image generator (8) which generates a digital image (11) visible to the consumer.

2. Lid structure for steel containers of refrigerated display counters for selling ice-cream according to claim one, **characterised in that** it comprises one respective removable lid (6) covering each steel container (2) wherein each lid (6) has on top an electronic image generator constituted by an holographic projector (8) which generates - in use - a holographic image (11) visible to the consumer of the ice-cream of the type and flavour contained in the steel container (2) which is closed by the lid structure (5).

3. Lid structure for steel containers of refrigerated display counters for selling ice-cream according to the preceding claims, **characterised in that** it comprises one respective removable lid (6) covering each steel container (2) wherein each lid (6) has on top an holographic projector (8) consisting of a rotary led bar (9) enclosed in a transparent cover (7) for generating - in use - a holographic image (11) of the ice-cream of the type and flavour contained in the steel container (2) which is closed by the lid structure (5).

4. Lid structure for steel containers of refrigerated display counters for selling ice-cream according to the preceding claims, **characterised in that** it comprises one respective removable lid (6) covering each steel container (2) wherein each lid (6) has on top an holographic projector (8) consisting of a rotary led bar (9) enclosed in a transparent cover (7) for generating - in use in the transparent cover (7)
- a holographic image (11) of the ice-cream of the type and flavour contained in the steel container (2) which is closed by the lid structure (5).

5. Lid structure for steel containers of refrigerated display counters for selling ice-cream according to the preceding claims, **characterised in that** it comprises any kind and type of electronic image generator.

6. Lid structure for steel containers of refrigerated display counters for selling ice-cream according to the preceding claims, **characterised in that** the electronic image generator is connected in wireless mode to at least one device suitable to control and adjust the functions thereof with electronic logic.

7. Lid structure for steel containers of refrigerated display counters for selling ice-cream according to the preceding claims, **characterised in that** the electronic image generator is controlled by an application managed by portable electronic devices such as smartphones or tablets.

8. Lid structure for steel containers of refrigerated display counters for selling ice-cream according to the preceding claims, **characterised in that** the electronic image generator is power-supplied by batteries associated therewith.

9. Lid structure for steel containers of refrigerated display counters for selling ice-cream according to claims 1 to 8, **characterised in that** the electronic image generator is network-supplied by means of through cables for hinges that constrain the lid (6) to the counter (1).

10. Lid structure for steel containers of refrigerated display counters for selling ice-cream according to claims 1 to 8, **characterised in that** it is devised with any conformation and in particular conical or pyramid-shaped and with any kind and type of opening device, constrained to the surface such as hinges, linkages and the like, or on the contrary disengaged from the surface and removable in any case through top and/or lateral gripping means and/or handles.

## Patentansprüche

1. Deckelkonstruktion für Stahlbehälter von gekühlten Verkaufstheken zum Verkauf von Speiseeis, wobei das Speiseeis zur Ausgabe in einer Vielzahl von mit Speiseeis gefüllten Stahlbehältern gelagert wird, die durch die aus Stahl gefertigten Deckel hermetisch verschlossen sind, wo das Speiseeis vor Licht und Temperaturschwankungen geschützt ist, womit die organoleptischen Eigenschaften und die hygienischen Bedingungen erhalten bleiben, wobei die Stahlbehälter in entsprechende Vertiefungen in der Theke eingelassen und davon gekühlt werden, um die zum Verkauf angebotene Auswahl an Speiseeissorten voneinander getrennt aufzubewahren, wobei die gekühlte Verkaufstheke in Arbeits- und Augenhöhe zwischen dem Bediener und den Kunden für die Kunden sichtbar angeordnet ist, und aus der der Bediener jeweils, nachdem es den Deckel des entsprechenden Stahlbehälters entfernt hat, die von dem Kunden gewünschte Sorte entnehmen kann **dadurch gekennzeichnet, dass** die Deckelkonstruktion einen abnehmbaren Deckel umfasst, der konfiguriert ist, um einen jeweiligen Stahlbehälter (2) abzudecken, bei dem
- jeder Deckel (5) in dem unteren Teil eine kreisförmige Stahlklappe _{[NL1]}(6) zum Einführen (3) in den jeweiligen Stahlbehälter (2), und eine transparente, kuppelförmige Abdeckung (7), die die Klappe (6) überragt, umfasst,
- wobei jeder abnehmbare Deckel (5) an seiner Oberseite einen jeweiligen elektronischen Bildgenerator (8) aufweist, der ein für den Verbraucher sichtbares digitales Bild (11) erzeugt.

2. Deckelkonstruktion für Stahlbehälter von gekühlten Verkaufstheken zum Verkauf von Speiseeis nach Anspruch 1, **dadurch gekennzeichnet, dass** sie einen jeweiligen abnehmbaren Deckel (6) umfasst, der jeden Stahlbehälter (2) abdeckt, wobei jeder Deckel (6) an seiner Oberseite einen elektronischen Bildgenerator aufweist, der aus einem holografischen Projektor (8) besteht, der im Gebrauch ein für den Verbraucher sichtbares holografisches Bild (11) des Speiseeises der Art und Geschmacksrichtung erzeugt, das in dem Stahlbehälter (2) enthalten ist, der durch die Deckelkonstruktion (5) verschlossen ist.

3. Deckelkonstruktion für Stahlbehälter von gekühlten Verkaufstheken zum Verkauf von Speiseeis nach den vorherigen Ansprüchen, **dadurch gekennzeichnet, dass** es jeweils einen abnehmbaren Deckel (6) umfasst, der jeden Stahlbehälter (2) abdeckt, wobei jeder Deckel (6) an seiner Oberseite einen holografischen Projektor (8) aufweist, der aus einer drehenden LED-Leiste (9) besteht, die in einer transparenten Abdeckung (7) umschlossen ist, um im Gebrauch ein holografisches Bild (11) des Speiseeises der Art und Geschmacksrichtung zu erzeugen, das in dem Stahlbehälter (2) enthalten ist, der durch die Deckelkonstruktion (5) verschlossen ist.

4. Deckelkonstruktion für Stahlbehälter von gekühlten Verkaufstheken zum Verkauf von Speiseeis nach den vorherigen Ansprüchen, **dadurch gekennzeichnet, dass** es jeweils einen abnehmbaren Deckel (6) umfasst, der jeden Stahlbehälter (2) abdeckt, wobei jeder Deckel (6) an seiner Oberseite einen holografischen Projektor (8) aufweist, der aus einer drehenden LED-Leiste (9) besteht, die in einer transparenten Abdeckung (7) umschlossen ist, um im Gebrauch in der transparenten Abdeckung (7) ein holografisches Bild (11) des Speiseeises der Art und Geschmacksrichtung zu erzeugen, das in dem Stahlbehälter (2) enthalten ist, der durch die Deckelkonstruktion (5) verschlossen ist.

5. Deckelkonstruktion für Stahlbehälter von gekühlten Verkaufstheken zum Verkauf von Speiseeis nach den vorherigen Ansprüchen, **dadurch gekennzeichnet, dass** es jede Art und jeden Typ eines elektronischen Bildgenerators umfasst.

6. Deckelkonstruktion für Stahlbehälter von gekühlten Verkaufstheken zum Verkauf von Speiseeis nach den vorherigen Ansprüchen, **dadurch gekennzeichnet, dass** der elektronische Bildgenerator in drahtlosem Modus mit mindestens einer Vorrichtung verbunden ist, die geeignet ist, um dessen Funktionen mittels elektronischer Logik zu steuern und anzupassen.

7. Deckelkonstruktion für Stahlbehälter von gekühlten Verkaufstheken zum Verkauf von Speiseeis nach den vorherigen Ansprüchen, **dadurch gekennzeichnet, dass** der elektronische Bildgenerator über eine Anwendung gesteuert wird, die auf tragbaren elektronischen Vorrichtungen, wie beispielweise Smartphones oder Tablets, gehandhabt wird.

8. Deckelkonstruktion für Stahlbehälter von gekühlten Verkaufstheken zum Verkauf von Speiseeis nach den vorherigen Ansprüchen, **dadurch gekennzeichnet, dass** der elektronische Bildgenerator über damit assoziierte Batterien mit Strom versorgt wird.

9. Deckelkonstruktion für Stahlbehälter von gekühlten Verkaufstheken zum Verkauf von Speiseeis nach den Ansprüchen 1 bis 8, **dadurch gekennzeichnet, dass** der elektronische Bildgenerator mittels Durchgangskabel für Scharniere, die den Deckel (6) an der Theke (1) befestigen, mit einem Netz verbunden ist.

10. Deckelkonstruktion für Stahlbehälter von gekühlten Verkaufstheken zum Verkauf von Speiseeis nach den Ansprüchen 1 bis 8, **dadurch gekennzeichnet, dass** es in beliebiger Form, insbesondere konisch oder pyramidenförmig, und mit beliebigen Arten und Typen von Öffnungsvorrichtungen ausgebildet ist, die an der Oberfläche befestigt sind, wie beispielsweise Scharniere, Gelenkverbindungen und dergleichen, oder im Gegenteil von der Oberfläche gelöst und in jedem Fall durch obere und/oder seitliche Greifeinrichtungen und/oder Griffe abnehmbar ist.

## Revendications

1. Structure de couvercle pour récipients en acier de comptoirs frigorifiques destinés à la vente de glaces, dans laquelle les glaces sont stockées dans une pluralité de récipients en acier remplis de glaces en vue de leur distribution, fermés hermétiquement par lesdits couvercles en acier, les glaces étant ainsi protégées de la lumière et des variations de température, ce qui permet de préserver leurs propriétés organoleptiques et les conditions d'hygiène, les récipients en acier étant encastrés dans des alvéoles respectives du comptoir et refroidis par ce dernier afin de contenir séparément l'assortiment de parfums de glaces proposés à la vente, le comptoir frigorifique étant intercalé à une hauteur fonctionnelle et visuelle entre l'opérateur et les clients, à la vue du consommateur, et dans chacun desquels l'opérateur peut prélever de la crème glacée après avoir retiré le couvercle du récipient en acier spécifique afin de composer l'assortiment demandé par le client, **caractérisé en ce que** la structure de couvercle comprend un couvercle amovible configuré pour recouvrir un récipient en acier respectif
(2) dans lequel :
- chaque couvercle (5) comprend, dans sa partie inférieure, un obturateur circulaire en acier (6) _{[NL1]}destiné à être inséré (3) dans le conteneur en acier correspondant (2), ainsi qu'un couvercle transparent en forme de dôme (7) surmontant l'obturateur (6),
- dans lequel chaque couvercle amovible (5) comporte, sur sa face supérieure, un générateur d'images électronique (8) qui génère une image numérique (11) visible par le consommateur.

2. Structure de couvercle pour récipients en acier de comptoirs frigorifiques destinés à la vente de glaces selon la revendication 1, **caractérisée en ce qu'**elle comprend un couvercle amovible (6) recouvrant respectivement chaque récipient en acier (2), chaque couvercle (6) comportant sur sa face supérieure un générateur d'images électronique constitué d'un projecteur holographique (8) qui génère, pendant l'utilisation, une image holographique (11) visible par le consommateur, représentant le type de glace et le parfum contenus dans le récipient en acier (2) qui est fermé par la structure de couvercle (5).

3. Structure de couvercle pour récipients en acier de comptoirs frigorifiques destinés à la vente de glaces selon les revendications précédentes, **caractérisée en ce qu'**elle comprend un couvercle amovible (6) recouvrant respectivement chaque récipient en acier (2), chaque couvercle (6) comportant sur sa face supérieure un projecteur holographique (8) constitué d'une barre LED rotative (9) enfermée dans un couvercle transparent (7) destiné à générer, lors de l'utilisation, une image holographique (11) de la glace, indiquant le type et le parfum contenus dans le récipient en acier (2) fermé par la structure de couvercle (5).

4. Structure de couvercle pour récipients en acier de comptoirs frigorifiques destinés à la vente de glaces selon les revendications précédentes, **caractérisée en ce qu'**elle comprend un couvercle amovible (6) recouvrant respectivement chaque récipient en acier (2), chaque couvercle (6) comportant sur sa face supérieure un projecteur holographique (8) constitué d'une barre LED rotative (9) enfermée dans un couvercle transparent (7) destiné à générer, pendant l'utilisation, à l'intérieur du couvercle transparent (7), une image holographique (11) de la glace, indiquant le type de glace et le parfum contenus dans le récipient en acier (2) fermé par la structure de couvercle (5).

5. Structure de couvercle pour récipients en acier de comptoirs frigorifiques destinés à la vente de glaces selon les revendications précédentes, **caractérisée en ce qu'**elle comprend un générateur d'images électronique de tout type et de toute nature.

6. Structure de couvercle pour récipients en acier de comptoirs frigorifiques destinés à la vente de glaces selon les revendications précédentes, **caractérisée en ce que** le générateur d'images électronique est connecté sans fil à au moins un dispositif permettant de commander et de régler ses fonctions à l'aide d'une logique électronique.

7. Structure de couvercle pour récipients en acier de comptoirs frigorifiques destinés à la vente de glaces selon les revendications précédentes, **caractérisée en ce que** le générateur d'images électronique est commandé par une application gérée par des appareils électroniques portables tels que des smartphones ou des tablettes.

8. Structure de couvercle pour récipients en acier de comptoirs frigorifiques destinés à la vente de glaces selon les revendications précédentes, **caractérisée en ce que** le générateur d'images électronique est alimenté par des piles qui lui sont associées.

9. Structure de couvercle pour récipients en acier de comptoirs frigorifiques destinés à la vente de glaces selon les revendications 1 à 8, **caractérisée en ce que** le générateur d'images électronique est alimenté par le réseau au moyen de câbles débouchants prévus pour les charnières qui fixent le couvercle (6) à la vitrine (1).

10. Structure de couvercle pour récipients en acier de comptoirs frigorifiques destinés à la vente de glaces selon les revendications 1 à 8, **caractérisée en ce qu'**elle est conçue avec n'importe quelle conformation, notamment conique ou pyramidale, et avec n'importe quel type de dispositif d'ouverture, fixé à la surface, tel que des charnières, des tringleries et autres éléments similaires, ou au contraire détaché de la surface et amovible dans tous les cas grâce à des moyens de préhension supérieurs et/ou latéraux et/ou des poignées.
